# DEMANDE DE BREVET EUROPEEN

(11) **EP 3 738 486 A1**
(43) Date de publication de la demande: **18.11.2020**
(21) Numéro de dépôt: 20174526.2
(22) Date de dépôt: 13.05.2020
(51) Int. Cl.: A47J 41/00, A47J 27/13

(54) **ANNEAU ÉLASTIQUE POUR RÉCIPIENTS À DOUBLES PAROIS**

(30) Priorité: 13.05.2019 FR 1904917; 13.05.2019 FR 1904918
(71) Demandeur: Silodesign Sarl, 92110 Clichy (FR)
(72) Inventeur: GAUTHROT, Romain, 93450 L'ILE SAINT DENIS (FR)
(74) Mandataire: Touroude, Magali Linda

(57) **Abrégé**

En synthèse, l'invention concerne un récipient à double parois (2) comprenant un réceptacle extérieur (22) et au moins un élément amovible (21) logé dans le réceptacle extérieur (22) de manière coaxiale relativement à un axe central O du récipient à double parois (2). Un centrage axial de chaque élément amovible (21) introduit dans le réceptacle extérieur (22) est assuré par un anneau élastique (1) qui est monté par emmanchement et de manière non permanente sur l'élément amovible (21) correspondant. Chaque élément amovible (21) repose axialement sur l'élément amovible (21) directement extérieur ou sur le réceptacle extérieur (22) par l'intermédiaire d'un épaulement (2121) situé au niveau d'une partie supérieure (213) de l'élément amovible (21) et qui repose sur une extrémité axiale supérieure de l'élément amovible (21) directement extérieur ou sur le réceptacle extérieur (22). L'invention permet ainsi de proposer un assemblage modulaire de tels récipients à double parois (2), conduisant à une pluralité de combinaisons possibles obtenues avec des éléments modulaires pouvant être montés en gigogne les uns dans les autres.

## Description

### Domaine technique

Le contexte technique de la présente invention est celui des arts de la table, et plus particulièrement des récipients à double parois.

### Etat de la technique antérieure

Dans le domaine des arts de la table, on connait des récipients à double parois utilisés pour leurs caractéristiques isothermiques : les deux parois sont séparées par un espace vide ou rempli d'un gaz à faible conductivité thermique. Cette configuration permet ainsi de limiter les transferts calorifiques entre une paroi extérieure et une paroi intérieure destinée à recevoir par exemple un liquide ou un aliment solide. Ainsi, il est possible de conserver plus longtemps une température du liquide ou de l'aliment solide, froide ou chaude

On connait notamment des récipients à double parois réalisés de manière monobloc, les deux parois étant soudées l'une à l'autre après qu'elles aient été fabriquées indépendamment l'une de l'autre, par soufflage. Plus particulièrement, la paroi intérieure est soudée sur la paroi extérieure au niveau de leurs extrémités supérieures ; et un trou est réalisé lors de la fabrication, au niveau d'une extrémité inférieure de la paroi extérieure afin de permettre un équilibrage de pression de l'espace situé entre les deux parois par rapport à la pression ambiante, durant le refroidissement des récipients à double parois connus et d'éviter d'éventuelles casses.

Un inconvénient connu de ces récipients à double parois réside ainsi dans la complexité des procédés de fabrication, ces procédés de fabrication comprenant de nombreuses manipulations pour assembler les deux parois entre elles. En outre, la réalisation d'une soudure entre la paroi intérieure et la paroi extérieure pose souvent de nombreux problèmes d'étanchéité, de déformation ou encore de défauts visibles - non souhaités dans le domaine des arts de la table.

En outre, même si le trou est refermé en fin de processus de fabrication, soit par une colle, soit par une pastille en silicone, la présence d'un tel trou entre les deux parois peut conduire, à l'usage, à des problèmes récurrents de qualité, tels que par exemples l'apparition de traces et/ou de poussières et/ou d'humidité entre les deux parois, rendant le récipient à double parois irrécupérable.

Un but de l'invention est de proposer un nouvel anneau élastique et un nouveau récipient à double parois afin de répondre au moins en grande partie aux problèmes précédents en apportant en outre d'autres avantages.

Plus particulièrement, un but de l'invention est de faciliter l'assemblage sans soudure de deux parois en contrôlant une distance séparant lesdites deux parois.

Un autre but de l'invention est d'améliorer la robustesse et la fiabilité de tels récipients à double parois.

Un autre but de l'invention est de faciliter la production et l'entretien des récipients à double parois.

Un autre but de l'invention est de permettre plus de modularité dans la conception des récipients à double parois.

### Exposé de l'invention

Selon un premier aspect de l'invention, on atteint au moins l'un des objectifs précités avec un anneau élastique destiné à être interposé entre une première paroi d'appui et une deuxième paroi d'appui d'un récipient à double parois, l'anneau élastique étant formé par une surface annulaire déformable et dentelée comprenant une pluralité de dents qui s'étendent radialement par rapport à un axe central de l'anneau élastique, la surface déformable dentelée comportant (i) une première face d'appui radial destinée à être mise en appui contre la première paroi d'appui du récipient, et (ii) une deuxième face d'appui radial destinée à être mise en appui contre la deuxième paroi d'appui du récipient. Conformément à l'invention, une superficie de la première face d'appui radial est supérieure à une superficie de la deuxième face d'appui radial.

D'une manière générale, dans le contexte de l'invention, le terme paroi désigne un réceptacle concave destiné à être utilisé avec l'anneau élastique conforme au premier aspect de l'invention. On comprend en effet que l'anneau élastique est destiné à permettre un assemblage coaxial d'au moins deux réceptacles concaves, ledit anneau élastique permettant de définir un intervalle entre les parois de chaque réceptacle concave.

Plus particulièrement, l'anneau élastique conforme au premier aspect de l'invention est destiné à être monté par emmanchement sur la première paroi et/ou sur la deuxième paroi du récipient avec lequel il est destiné à être assemblé. L'anneau élastique conforme au premier aspect de l'invention joue ainsi le rôle d'une entretoise élastique et amortissante pour un tel assemblage, la première et la deuxième paroi du récipient ainsi que l'anneau élastique conforme au premier aspect de l'invention étant tous sensiblement coaxiaux une fois l'assemblage réalisé.

Ainsi, l'anneau élastique conforme au premier aspect de l'invention permet de simplifier la fabrication et l'assemblage d'un récipient à double parois, en garantissant un montage non définitif de la première paroi par rapport à la deuxième paroi, facilitant ainsi les opérations de maintenance et de nettoyage notamment.

L'axe central de l'anneau élastique conforme au premier aspect de l'invention est défini ici comme l'axe perpendiculaire au plan d'élongation radial dudit anneau élastique.

Dans le contexte de la présente invention, l'adjectif déformable s'entend de la surface annulaire comme étant élastiquement déformable dans une direction parallèle à l'axe central de l'anneau élastique, dite direction axiale, et/ou dans une pluralité de directions toutes perpendiculaires à l'axe centrale, dites directions radiales, et/ou par rapport à un plan transversal s'étendant perpendiculairement à l'axe central, dite direction angulaire. En d'autres termes, lorsque l'anneau élastique conforme au premier aspect de l'invention est déformable axialement, alors il est configuré pour pouvoir subir une déformation élastique parallèlement à son axe central ; lorsque l'anneau élastique conforme au premier aspect de l'invention est déformable radialement, alors il est configuré pour pouvoir subir une déformation élastique radiale conduisant à une dilatation ou une contraction de ses dimensions radiales, telles que par exemple son diamètre ; lorsque l'anneau élastique conforme au premier aspect de l'invention est déformable angulairement, alors il est configuré pour pouvoir subir une torsion par rapport à son plan transversal tel que défini précédemment. Dans tous les cas de figures, l'anneau élastique conforme au premier aspect de l'invention reprend sa forme et sa configuration initiale lorsqu'il n'est plus soumis aux efforts et/ou déformations précitées.

Consécutivement, l'anneau élastique conforme au premier aspect de l'invention joue un rôle d'amortisseur entre les deux parois d'un récipient à double parois : ces capacités de déformation élastiques permettent d'absorber une énergie mécanique et d'éviter la casse de l'une et/ou l'autre desdites parois.

Bien entendu, l'anneau élastique conforme au premier aspect de l'invention peut être utilisé dans de nombreux autres domaines où il est recherché de réaliser un assemblage coaxial de deux pièces tout en garantissant l'existence d'un intervalle prédéterminé entre lesdites deux pièces. De manière plus spécifique mais non limitative, l'invention conforme à son premier aspect se destine plus particulièrement aux éléments des arts de la table, tels que par exemple aux verres à doubles parois, aux carafes à doubles parois, aux plats à doubles parois et, d'une manière plus générale, à tout récipient ou accessoire de service constitué d'au moins deux parois devant être distantes l'une de l'autre.

L'anneau élastique conforme au premier aspect de l'invention comprend avantageusement au moins un des perfectionnements ci-dessous, les caractéristiques techniques formant ces perfectionnements pouvant être prises seules ou en combinaison :
- la première face d'appui radial est formée par une surface continue qui s'étend radialement autour de l'axe central selon un contour fermé. En d'autres termes, la première face d'appui radial de l'anneau élastique conforme au premier aspect de l'invention est formée par une unique surface fermée. Cette configuration avantageuse permet de maximiser une superficie de la première face d'appui radial. Consécutivement, cette configuration avantageuse permet d'augmenter des forces d'adhérence de l'anneau élastique conforme au premier aspect de l'invention lorsqu'il est monté sur la première paroi, garantissant un bon maintien dudit anneau élastique sur ladite première paroi ;
- - la deuxième face d'appui radial est formée par une pluralité de zones d'appui distinctes et distantes les unes des autres, de sorte que les zones d'appui forment collectivement une surface discontinue. En d'autres termes, la deuxième face d'appui radial de l'anneau élastique conforme au premier aspect de l'invention est formée par plusieurs petites zones d'appui réparties autour de l'axe central. Cette configuration avantageuse permet de limiter une superficie de la deuxième face d'appui radial et de centrer coaxialement l'anneau élastique par rapport à la deuxième paroi. Consécutivement, cette configuration avantageuse permet de limiter des forces d'adhérence de l'anneau élastique conforme au premier aspect de l'invention lorsqu'il est monté sur la deuxième paroi, permettant de pouvoir réaliser un glissement relatif de l'anneau élastique par rapport à la deuxième paroi lors de son assemblage ou de son désassemblage ;
- de manière particulièrement avantageuse, l'anneau élastique conforme au premier aspect de l'invention comprend simultanément ces deux premiers perfectionnements : la première face d'appui radial est formée par une surface continue qui s'étend radialement autour de l'axe central selon un contour fermé, et dans lequel la deuxième face d'appui radial est formée par une pluralité de zones d'appui distinctes et distantes les unes des autres, de sorte que la pluralité des zones d'appui forment collectivement une surface discontinue. Comme évoqué précédemment, cette configuration avantageuse permet de doser précisément les forces d'adhérence de l'anneau élastique conforme au premier aspect de l'invention par rapport à la première et à la deuxième paroi du récipient avec lequel il est destiné à être assemblé. Consécutivement, il est ainsi possible de faciliter les opérations d'assemblage et de désassemblage en facilitant le glissement de l'anneau élastique par rapport à la deuxième paroi tout en assurant un maintien dudit anneau élastique avec la première paroi, de sorte à ce qu'ils forment ensemble un module plus facilement manipulable ;
- les zones d'appui formant la deuxième face d'appui radial forment collectivement une surface cylindrique. Eventuellement, en fonction de la forme de la deuxième paroi du récipient avec lequel l'anneau élastique conforme au premier aspect de l'invention est destiné à être assemblé, les zones d'appui formant la deuxième face d'appui radial forment collectivement une surface conique, polygonale ou quelconque. Cette configuration avantageuse permet de faciliter l'assemblage coaxial de l'anneau élastique avec la deuxième paroi du récipient avec lequel il est destiné à collaborer. D'une manière générale, les zones d'appui formant la deuxième face d'appui radial de l'anneau élastique conforme au premier aspect de l'invention forment collectivement une surface analogue avec la surface de la deuxième paroi du récipient avec lequel l'anneau élastique est destiné à être assemblé ;
- selon une première variante de réalisation préférée de l'invention, la première face d'appui radial de l'anneau élastique conforme au premier aspect de l'invention est située radialement à l'intérieur de la surface déformable dentelée, et la deuxième face d'appui radial de l'anneau élastique conforme au premier aspect de l'invention est située radialement à l'extérieur de la surface déformable dentelée. Selon une deuxième variante de réalisation, la première face d'appui radial l'anneau élastique conforme au premier aspect de l'invention est située radialement à l'extérieur de la surface déformable dentelée, et la deuxième face d'appui radial l'anneau élastique conforme au premier aspect de l'invention est située radialement à l'intérieur de la surface déformable dentelée ;
- la première face d'appui radial de l'anneau élastique conforme au premier aspect de l'invention a une rugosité supérieure à une rugosité de la deuxième face d'appui radial. Cette configuration avantageuse permet d'augmenter les forces d'adhérence entre l'anneau élastique et la première paroi du récipient avec lequel il est destiné à être assemblé, comparativement aux forces d'adhérences apparaissant entre ledit anneau élastique et la deuxième paroi dudit récipient. Selon un mode préféré de réalisation de l'invention, la première face d'appui radial est lisse tandis que la deuxième face d'appui radial est rugueuse ;
- la première face d'appui radial prend avantageusement la forme d'une paroi cylindrique qui s'étend axialement selon l'axe central de l'anneau élastique. Eventuellement, en fonction de la forme de la première paroi du récipient avec lequel l'anneau élastique conforme au premier aspect de l'invention est destiné à être assemblé, la première face d'appui radial forme une surface conique, polygonale ou quelconque. Cette configuration avantageuse permet de faciliter l'assemblage coaxial de l'anneau élastique avec la première paroi du récipient avec lequel il est destiné à collaborer. D'une manière générale, la première face d'appui radial de l'anneau élastique conforme au premier aspect de l'invention prend la forme d'une surface analogue avec la surface de la première paroi du récipient avec lequel l'anneau élastique est destiné à être assemblé ;
- la surface annulaire et dentelée de l'anneau élastique conforme au premier aspect de l'invention est formée par une courbe directrice fermée - préférentiellement circulaire - à partir de laquelle s'étend une génératrice définissant un plan avec l'axe central de l'anneau élastique. En d'autres termes, la génératrice formant la surface annulaire à partir de la courbe directrice fermée est soit parallèle à l'axe central de l'anneau élastique, soit sécante avec ledit axe central ;
- selon un mode préféré de réalisation de l'anneau élastique conforme au premier aspect de l'invention, la première face d'appui radial prend la forme d'une paroi cylindrique qui s'étend axialement selon l'axe central de l'anneau élastique et, selon une direction parallèle à son axe central, la surface annulaire et dentelée de l'anneau élastique comprend une partie cylindrique prolongée par une partie tronconique. Dans cette configuration, la deuxième face d'appui radial est située au niveau de la partie cylindrique de la surface annulaire et dentelée de l'anneau élastique ;
- la surface annulaire et dentelée de l'anneau élastique conforme au premier aspect de l'invention comprend au moins trois dents qui s'étendent radialement par rapport à l'axe central. Chaque dent prend la forme d'une protrusion qui s'étend en saillie par rapport à un corps annulaire de l'anneau élastique conforme au premier aspect de l'invention. Avantageusement, la surface annulaire et dentelée de l'anneau élastique comprend entre trois et soixante-quatre dents qui s'étendent radialement par rapport à l'axe central. Selon un mode préféré de l'invention, les dents formant la surface annulaire de l'anneau élastique conforme au premier aspect de l'invention s'étendent radialement vers l'extérieur par rapport à la première face d'appui radial. Dans cette configuration, l'anneau élastique est destiné à être emmanché (i) par l'extérieur sur une première paroi du récipient avec lequel il est destiné à être assemblé, et (ii) par l'intérieur sur une deuxième paroi dudit récipient : l'anneau élastique conforme au premier aspect de l'invention se trouve alors - une fois l'assemblage réalisé - dans une position radialement intermédiaire entre les deux parois du récipient ;
- la pluralité de dents formant la surface annulaire s'étend en saillie depuis la partie cylindrique de la surface annulaire et dentelée de l'anneau élastique conforme au premier aspect de l'invention, et elles s'étendent radialement vers l'extérieur par rapport à la première face d'appui radial. Dans cette configuration, l'anneau élastique conforme au premier aspect de l'invention est configuré pour pouvoir être emmanché (i) par l'extérieur sur une première paroi du récipient avec lequel il est destiné à être assemblé, et (ii) par l'intérieur sur une deuxième paroi dudit récipient : l'anneau élastique conforme au premier aspect de l'invention se trouve alors - une fois l'assemblage réalisé - dans une position radialement intermédiaire entre les deux parois du récipient ;
- les dents formant la surface annulaire et dentelée sont angulairement régulièrement réparties autour de l'axe central, une distance angulaire entre deux dents successives étant constante. Cette configuration avantageuse permet de réaliser un meilleur centrage axial par rapport à l'axe central de l'anneau élastique conforme au premier aspect de l'invention et par rapport aux parois du récipient avec lequel il est destiné à être assemblé ;
- les dents formant la surface annulaire et dentelée ont une conformation générale triangulaire ou arrondies ou prismatiques. D'une manière avantageuse, toutes les dents de la surface annulaire et dentelée ont la même conformation générale. Eventuellement, une première partie des dents ont une première conformation générale et une deuxième partie des dents ont une deuxième conformation générale différente de la première conformation générale ;
- selon une direction axiale, l'anneau élastique conforme au premier aspect de l'invention comprend (i) une face supérieure d'appui axial plane formée par une face supérieure de la pluralité des dents de la surface annulaire et dentelée, et/ou (ii) une face inférieure d'appui axial plane formée par une face inférieure de la pluralité des dents de la surface annulaire et dentelée. En d'autres termes, suivant une direction axiale définie par son axe central, l'anneau élastique conforme au premier aspect de l'invention est délimité par la face supérieure d'appui axial et par la face inférieure d'appui axial ;
- la face supérieure d'appui axial et/ou la face inférieure d'appui axial sont destinées à être mise(s) en appui axial contre une paroi du récipient avec lequel l'anneau élastique est destiné à collaborer, en particulier lorsque la première et/ou la deuxième paroi dudit récipient comprend/comprennent un épaulement contre le(s)quel(s) l'anneau élastique est mis en butée pour réaliser un blocage axial ;
- la face supérieure d'appui axial et/ou la face inférieure d'appui axial de l'anneau élastique conforme au premier aspect de l'invention s'étendent perpendiculairement à l'axe central dudit anneau élastique. Avantageusement, la face supérieure d'appui axial est parallèle à la face inférieure d'appui axial de l'anneau élastique conforme au premier aspect de l'invention ;
- selon une première variante de réalisation, la face supérieure d'appui axial prend la forme d'une couronne cylindrique située axialement au-dessus de la pluralité des dents de la surface annulaire et dentelée. Dans cette première variante de réalisation, la couronne cylindrique s'étend radialement au-delà de la deuxième face d'appui radial de l'anneau élastique ; ou la couronne cylindrique est radialement confondue avec la deuxième face d'appui radial de l'anneau élastique. Cette configuration avantageuse permet de faciliter la mise en appui de l'anneau élastique conforme au premier aspect de l'invention contre un épaulement de la première et/ou deuxième paroi du récipient avec lequel ledit anneau élastique est destiné à être assemblé ;
- la face supérieure d'appui axial prend la forme d'une pluralité de casquettes, chaque casquette étant située au niveau d'une dent correspondante de la surface annulaire et dentelée, chaque casquette s'étendant radialement au-delà de la deuxième face d'appui radial de l'anneau élastique. Cette configuration avantageuse permet de faciliter la mise en appui de l'anneau élastique conforme au premier aspect de l'invention contre un épaulement de la première et/ou deuxième paroi du récipient avec lequel ledit anneau élastique est destiné à être assemblé ;
- la face supérieure d'appui axial et la face inférieure d'appui axial de l'anneau élastique sont avantageusement parallèles entre elles et s'étendent perpendiculairement à l'axe central de l'anneau élastique ;
- la face inférieure d'appui axial prend avantageusement la forme d'une ligne fermée, préférentiellement circulaire. D'une manière générale, la ligne fermée formant la face inférieure d'appui axial a une forme analogue à celle de la première paroi du récipient avec lequel l'anneau élastique conforme au premier aspect de l'invention est destiné à être assemblé ;
- une différence des diamètres de l'anneau élastique mesurés au niveau de la première et de la deuxième face d'appui radial est avantageusement comprise entre 6 millimètres et 60 millimètres ;
- au niveau de la face supérieure d'appui axial, une distance radiale entre la première face d'appui radial et la deuxième face d'appui radial est supérieure ou égale à 3 millimètres ;
- une largeur radiale de la face supérieure d'appui axial est avantageusement comprise entre 2 millimètres et 7 millimètres ;
- une largeur radiale de la face inférieure d'appui axial est avantageusement comprise entre 0,5 millimètres et 1,5 millimètres ;
- l'anneau élastique conforme au premier aspect de l'invention est avantageusement réalisé dans une matière élastique, telle que comprenant du caoutchouc par exemple. De manière préférentielle, l'anneau élastique conforme au premier aspect de l'invention est réalisé en silicone. Cette configuration avantageuse permet d'adapter un module de Young du matériau utilisé pour l'anneau élastique à son usage. En particulier, le choix d'un tel matériau est particulièrement intéressant dans le domaine des arts de la table, pour des questions d'hygiène, de nettoyage et de résistance. Il est avantageusement obtenu par moulage afin de réduire les coûts de fabrication et de faciliter sa production en série ;
- afin de pouvoir permettre une déformation élastique adaptée au contexte de l'invention, et notamment par rapport à son usage spécifique dans le domaine des arts de la table, une dureté Shore du matériau composant l'anneau élastique conforme à l'invention est comprise entre 20 degrés et 70 degrés. De manière préférentielle, le matériau dans lequel l'anneau élastique conforme au premier aspect de l'invention est réalisé est du silicone et selon une dureté Shore égale à 50 degrés.

Selon un deuxième aspect de l'invention, on atteint au moins l'un des objectifs précités avec un récipient à double parois comprenant (i) un élément amovible intérieur logé dans un réceptacle extérieur du récipient à double parois, et (ii) un anneau élastique conforme au premier aspect de l'invention ou selon l'un quelconque de ses perfectionnements interposé entre une paroi de l'élément amovible intérieur et une paroi du réceptacle extérieur du récipient à double parois, de sorte que la paroi de l'élément amovible intérieur est en appui contre une première face d'appui radial de l'anneau élastique, et la paroi du réceptacle extérieur est en appui contre une deuxième face d'appui radial dudit anneau élastique. En particulier, l'anneau élastique est formé par une surface annulaire déformable et dentelée comprenant une pluralité de dents qui s'étendent radialement par rapport à un axe central du récipient à double parois, la surface annulaire déformable et dentelée comportant (i) la première face d'appui radial configurée pour être mise en appui contre la paroi de l'élément amovible intérieur du récipient à double parois, et (ii) la deuxième face d'appui radial configurée pour être mise en appui contre la paroi du réceptacle extérieur du récipient à double parois, une superficie de la première face d'appui radial étant supérieure à une superficie de la deuxième face d'appui radial.

Contrairement aux récipients à double parois connus, le récipient à double parois conforme au deuxième aspect de l'invention est ainsi obtenu par un assemblage modulaire d'au moins un élément amovible dans le réceptacle extérieur, par l'intermédiaire de l'anneau élastique logée entre eux. Cette configuration avantageuse permet de pouvoir réaliser un très grand nombre de récipients à double parois en permettant de pouvoir combiner un ou plusieurs éléments amovibles dans le réceptacle extérieur, en fonction des effets recherchés.

Dans le contexte de l'invention, l'anneau élastique est destiné à permettre un assemblage - préférentiellement coaxial - entre au moins l'élément amovible intérieur et le réceptacle extérieur, ledit anneau élastique permettant de définir un intervalle entre les parois du récipient à double parois et de limiter voire empêcher d'éventuels chocs entre lesdites parois.

Plus particulièrement, l'anneau élastique du récipient à double parois conforme au deuxième aspect de l'invention est configuré pour être monté par emmanchement sur le réceptacle extérieur ou - préférentiellement sur l'élément amovible intérieur.

Ainsi, l'utilisation de l'anneau élastique entre au moins un élément amovible intérieur et le réceptacle extérieur du récipient à double parois permet de simplifier sa fabrication et son assemblage, en garantissant un montage non définitif dudit élément amovible intérieur dans le réceptacle extérieur, facilitant ainsi les opérations de maintenance et de nettoyage notamment.

Le récipient à double parois conforme au deuxième aspect de l'invention comprend avantageusement au moins un des perfectionnements ci-dessous, les caractéristiques techniques formant ces perfectionnements pouvant être prises seules ou en combinaison :
- l'élément amovible intérieur peut être du type d'un réceptacle intérieur, analogue au réceptacle extérieur du récipient à double parois, tel que par exemple un verre, une tasse, une bouteille, une carafe, un bocal, un bento, une boite, une verrine, un bol, un photophore, un huilier, un vinaigrier, un vase, un pot à épices, un pot à thé, un pot à café, un mug, un pot à lait, un verre à cocktail, un pichet, une théière, une cafetière, un infuseur, un seau à glace, un plat de cuisson... L'élément amovible intérieur peut aussi être du type d'un accessoire quelconque collaborant avec la paroi extérieure dudit récipient à double parois, tel que par exemple un bouchon, un bec verseur, un couvercle, un col, un goulot...
- l'élément amovible intérieur, le réceptacle extérieure et l'anneau élastique du récipient à double parois conforme au deuxième aspect de l'invention sont tous disposés de manière coaxiale les uns par rapport aux autres, l'élément amovible intérieur dudit récipient à double parois étant en appui radial contre la première face d'appui radial de l'anneau élastique, et le réceptacle extérieur dudit récipient à double parois étant en appui radial contre la deuxième face d'appui radial dudit anneau élastique . L'adjectif radial est pris ici selon un plan perpendiculaire à un axe central du récipient à double parois, l'axe central étant défini par un axe de symétrie dudit récipient à double parois et/ou un axe parallèle à des génératrices délimitant la paroi du réceptacle extérieur et/ou la paroi de l'élément amovible intérieur, un tel axe central passant par le centre du récipient à double parois. En d'autres termes, l'élément amovible intérieur est monté en gigogne dans le réceptacle extérieure, l'anneau élastique permettant de rendre un tel assemblage coaxial par rapport à l'axe central dudit du récipient à double parois conforme au deuxième aspect de l'invention. Dans cette configuration avantageuse, l'élément amovible intérieur est distant du réceptacle extérieur grâce à l'anneau élastique, de sorte que la paroi de l'élément amovible intérieur n'est pas en contact avec la paroi du réceptacle extérieur ;
- l'élément amovible intérieur du récipient à double parois conforme au deuxième aspect de l'invention est un premier élément amovible et l'anneau élastique interposé entre le premier élément amovible et le réceptacle extérieur du récipient à double parois est un premier anneau élastique, le récipient à double parois comprenant en outre au moins un deuxième élément amovible logé de manière coaxiale dans le premier élément amovible par l'intermédiaire d'un deuxième anneau élastique entre chaque élément amovible directement adjacent. En d'autres termes, le récipient à double parois conforme au deuxième aspect de l'invention comprend alors un ou plusieurs modules formés par un élément amovible et un anneau élastique, chaque module étant monté de manière coaxiale dans le réceptacle extérieur ou dans le module directement adjacent. A titre d'exemple non limitatif, dans le cas où le récipient à double parois comprend un seul deuxième élément amovible, alors ledit deuxième élément amovible est associé à un unique deuxième anneau élastique monté sur ledit deuxième élément amovible afin de permettre son centrage axial par rapport au premier élément amovible du récipient à double parois, une paroi du deuxième élément amovible étant en appui radial contre une première face d'appui radial du deuxième anneau élastique, et la paroi du premier élément amovible étant en appui radial contre une deuxième face d'appui radial dudit deuxième anneau élastique. Dans le cas où le récipient à doubles parois comprend un deuxième et un troisième éléments amovibles montés coaxialement les uns avec les autres et relativement au premier élément amovible du récipient à double parois, alors :
- le deuxième élément amovible est associé à un deuxième anneau élastique monté sur ledit deuxième élément amovible, le deuxième élément amovible étant en appui radial contre une première face d'appui radial du deuxième anneau élastique, et le premier élément amovible dudit récipient à double parois étant en appui radial contre une deuxième face d'appui radial dudit deuxième anneau élastique ; et
- un troisième élément amovible est associé à un troisième anneau élastique monté sur ledit troisième élément amovible, le troisième élément amovible étant en appui radial contre une première face d'appui radial du troisième anneau élastique, et une deuxième face d'appui radial dudit troisième anneau élastique est en appui radial cotre le deuxième élément amovible.
- d'une manière plus générale, l'invention conforme à son deuxième aspect permet un assemblage coaxial d'une pluralité d'éléments amovibles montés à l'intérieur du premier élément amovible du récipient à double parois, par l'intermédiaire de leurs anneaux élastiques respectifs, et selon un montage gigogne : chaque élément amovible étant disposé à l'intérieur de l'élément amovible directement adjacent, par l'intermédiaire d'un anneau élastique monté sur chaque élément amovible ;
- la paroi d'au moins un élément amovible comprend un moyen de blocage axial de l'anneau élastique associé, le moyen de blocage axial étant configuré pour bloquer l'anneau élastique selon une direction axiale par rapport audit au moins élément amovible correspondant. En d'autres termes, tout ou partie du ou des éléments amovibles assemblés les uns aux autres pour former le récipient à double parois conforme au deuxième aspect de l'invention comprend un moyen de blocage axial de l'anneau élastique collaborant avec lui afin d'améliorer sa fixation - détachable - avec ledit ou lesdits élément(s) amovible(s) correspondant(s) ;
- selon un premier mode de réalisation, le moyen de blocage axial est du type d'un épaulement formé sur la paroi d'au moins un élément amovible correspondant, l'épaulement s'étendant radialement vers l'extérieur par rapport à ladite paroi. Cette configuration avantageuse permet de limiter un glissement de l'anneau élastique sur l'élément amovible sur lequel elle est montée, durant les opérations d'assemblage ou de désassemblage du récipient à double parois conforme au deuxième aspect de l'invention. Selon une première variante de réalisation, l'épaulement prend la forme d'un épaulement circonférentiel s'étendant en saillie radialement vers l'extérieur depuis la paroi de l'élément amovible associé et selon un contour fermé par rapport à un axe central du récipient à double parois conforme au deuxième aspect de l'invention. Selon une deuxième variante de réalisation, l'épaulement prend la forme d'un ou plusieurs segments angulaires répartis angulairement autour d'un axe central du récipient à double parois, chaque segment angulaire formant l'épaulement s'étendant en saillie radialement vers l'extérieur depuis la paroi de l'élément amovible associé à l'anneau élastique ;
- selon un deuxième mode de réalisation, le moyen de blocage axial de l'anneau élastique sur la paroi de l'au moins un élément amovible du récipient à double parois conforme au deuxième aspect de l'invention est du type d'une rainure circonférentielle formée sur ladite paroi dudit au moins un élément détachable, ladite rainure s'étendant circonférentiellement autour de l'axe central selon un contour fermé. Dans ce deuxième mode de réalisation, lorsque l'anneau élastique est monté sur l'élément amovible correspondant, il est alors logé dans la rainure circonférentielle dudit élément amovible afin d'être solidarisée à lui ;
- selon un troisième mode de réalisation, le moyen de blocage axial de l'anneau élastique sur la paroi de l'élément amovible correspondant du récipient à double parois est du type d'un collage ou d'un soudage de l'entretoise détachable sur ladite paroi.
- le deuxième élément amovible du récipient à double parois conforme au deuxième aspect de l'invention comprend (i) une partie inférieure située radialement et axialement à l'intérieur du premier élément amovible, et (ii) une partie supérieure dont des dimensions radiales sont supérieures à des dimensions radiales de la partie inférieure, le deuxième anneau élastique du récipient à double parois conforme au deuxième aspect de l'invention étant monté par emmanchement sur la partie inférieure du deuxième élément amovible et contre une extrémité inférieure de la partie supérieure dudit deuxième élément amovible. Cette configuration avantageuse permet de faciliter l'emmanchement du deuxième anneau élastique sur le deuxième élément amovible, ledit deuxième anneau élastique étant alors mis en butée axial contre la partie supérieure dudit deuxième élément amovible. De manière analogue, le premier élément amovible comprend avantageusement (i) une partie inférieure située radialement et axialement à l'intérieur du réceptacle extérieur du récipient à doubles parois conforme au deuxième aspect de l'invention, et (ii) une partie supérieure dont des dimensions radiales sont supérieures à des dimensions radiales de la partie inférieure, le premier anneau élastique du récipient à double parois conforme au deuxième aspect de l'invention étant monté par emmanchement sur la partie inférieure du premier élément amovible et contre une extrémité inférieure de la partie supérieure dudit premier élément amovible. Cette configuration avantageuse permet de faciliter l'emmanchement du premier anneau élastique sur le premier élément amovible, ledit premier anneau élastique étant alors mis en butée axial contre la partie supérieure dudit premier élément amovible ;
- selon un mode de réalisation particulièrement avantageux, les dimensions radiales de la partie supérieure de l'élément amovible intérieur sont identiques ou sensiblement identiques à des dimensions radiales de l'élément amovible directement adjacent et situé radialement à l'extérieur et/ou du réceptacle extérieur du récipient à double parois conforme au deuxième aspect de l'invention. Cette configuration permet avantageusement de réaliser un appui axial dudit l'élément amovible intérieur sur l'élément amovible directement adjacent et situé radialement à l'extérieur et/ou du réceptacle extérieur du récipient à double parois ;
- le récipient à double parois conforme au deuxième aspect de l'invention comprend un joint plat monté par emmanchement sur la partie inférieure du premier élément amovible et contre une extrémité inférieure de la partie supérieure dudit premier élément amovible, le premier anneau élastique étant monté axialement contre le joint plat. En d'autres termes, le joint plat est situé axialement dans une position intermédiaire entre (i) une extrémité inférieure de la partie supérieure du premier élément amovible sur lequel le joint plat est monté et (ii) une extrémité supérieure de l'élément amovible directement adjacent et situé radialement à l'extérieur ou du réceptacle extérieur du récipient à double parois. Cette configuration permet avantageusement de mieux absorber des chocs entre le premier élément amovible et l'élément amovible directement adjacent ou le réceptacle extérieur ;
- le réceptacle extérieur du récipient à double parois conforme au deuxième aspect de l'invention comprend une anse afin de faciliter sa préhension. Selon une première variante de réalisation, l'anse est rapportée sur le réceptacle extérieur du récipient à doubles paroi conforme au deuxième aspect de l'invention et fixée de manière détachable sur lui. Selon une deuxième variante de réalisation, l'anse est issue de matière avec le réceptacle extérieur du récipient à double parois conforme au deuxième aspect de l'invention, ladite anse et ledit réceptacle extérieur formant un ensemble monolithique. Par « issue de matière », on comprend que l'anse et le réceptacle extérieur sont obtenu au travers d'une même étape de fabrication et ils ne peuvent être séparés l'un de l'autre sans endommager tout ou partie de l'un d'entre eux ;
- le récipient à double parois conforme au deuxième aspect de l'invention comprend en outre une feuille décor logée entre le réceptacle extérieur et le premier élément amovible et/ou entre deux éléments amovibles directement adjacents. Cette configuration avantageuse permet de facilement personnaliser le récipient à double parois et de faciliter les opérations de nettoyage en ôtant ladite feuille de décor préalablement ;

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1A] illustre une vue en perspective d'un premier exemple de réalisation d'un anneau élastique conforme au premier aspect de l'invention ;
[Fig.1B] illustre une vue en coupe du premier exemple de réalisation de l'anneau élastique conforme au premier aspect de l'invention ;
[Fig.2A] illustre une vue en perspective d'un deuxième exemple de réalisation d'un anneau élastique conforme au premier aspect de l'invention ;
[Fig.2B] illustre une vue en coupe du deuxième exemple de réalisation de l'anneau élastique conforme au premier aspect de l'invention ;
[Fig.3A] illustre une vue en perspective d'un troisième exemple de réalisation d'un anneau élastique conforme au premier aspect de l'invention ;
[Fig.3B] illustre une vue en coupe du troisième exemple de réalisation de l'anneau élastique conforme au premier aspect de l'invention ;
[Fig.4A] illustre une vue en perspective d'un quatrième exemple de réalisation d'un anneau élastique conforme au premier aspect de l'invention ;
[Fig.4B] illustre une vue en coupe du quatrième exemple de réalisation de l'anneau élastique conforme au premier aspect de l'invention ;
[Fig.5A] illustre une vue en perspective d'un cinquième exemple de réalisation d'un anneau élastique conforme au premier aspect de l'invention ;
[Fig.5B] illustre une vue en coupe du cinquième exemple de réalisation de l'anneau élastique conforme au premier aspect de l'invention ;
[Fig.6A] illustre une vue en coupe d'un premier exemple de réalisation d'un récipient à double parois démonté conforme au premier aspect de l'invention ;
[Fig.6B] illustre une vue en coupe du premier exemple de réalisation du récipient à double parois assemblé conforme au premier aspect de l'invention ;
[Fig.7A] illustre une vue en coupe d'un deuxième exemple de réalisation d'un récipient à double parois démonté conforme au premier aspect de l'invention ;
[Fig.7B] illustre une vue en coupe du deuxième exemple de réalisation du récipient à double parois assemblé conforme au premier aspect de l'invention ;
[Fig.8A] illustre une vue en coupe d'un troisième exemple de réalisation d'un récipient à double parois démonté conforme au premier aspect de l'invention ;
[Fig.8B] illustre une vue en coupe du troisième exemple de réalisation du récipient à double parois assemblé conforme au premier aspect de l'invention ;

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

Dans le contexte de la présente invention, on définit les directions particulières suivantes :
- la direction axiale suivant une direction parallèle à l'axe central O du récipient à double parois 2, ou suivant une direction parallèle à l'axe médian O' de l'anneau élastique 1, représentée par l'axe Z dans les FIGURES. Par suite, les adjectifs «supérieur» et « inférieurs » sont définis relativement à l'axe Z ;
- les directions radiales prise dans un plan perpendiculaire à l'axe Z, représenté par le plan XY. Par suite, les adjectifs « intérieur» et « extérieur» sont définis relativement à une distance radiale par rapport à l'axe central O, O' ;
- l'adjectif « angulairement » est défini comme un angle pris par rapport à l'axe central O, O' du récipient à double parois 1 ou de l'anneau élastique 1.

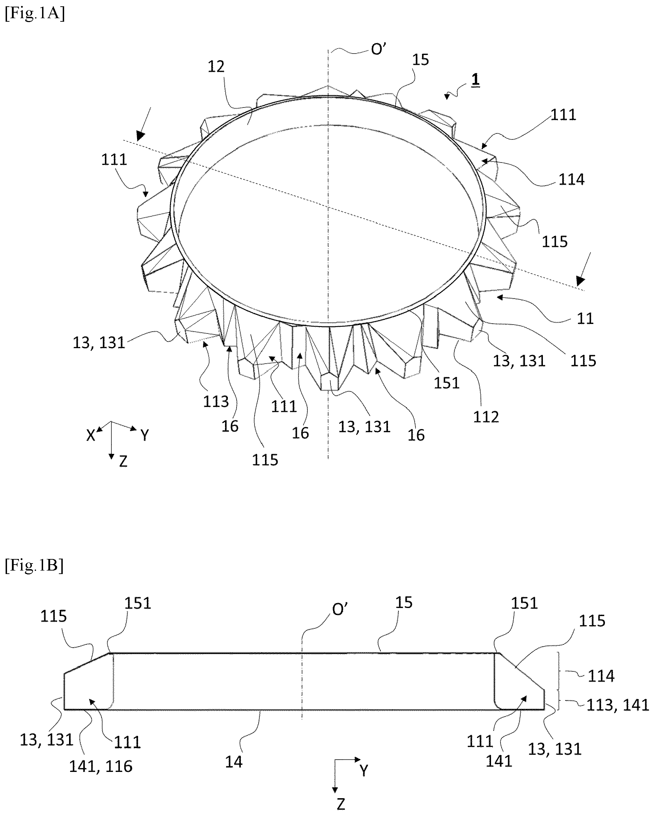

En référence aux FIGURES 1A à 5A et 1B à 5B, un anneau élastique 1 conforme au premier aspect de l'invention est décrit au travers plusieurs exemples de réalisation. D'une manière générale, un tel anneau élastique 1 a une conformation générale cylindrique suivant l'axe médian O' :' : il s'étend radialement dans un plan perpendiculaire à l'axe médian O' et selon une forme annulaire qui est extrudée selon l'axe médian O'.

De manière plus particulière, l'anneau élastique 1 conforme au premier aspect de l'invention est essentiellement formé par une surface 11 annulaire déformable et dentelée comprenant une pluralité de dents 111 qui s'étendent radialement par rapport à l'axe central de l'anneau élastique 1, la surface annulaire dentelée 11 comportant :
- une première face d'appui radial 12 destinée à être mise en appui contre une première paroi d'un récipient avec lequel l'anneau élastique est destiné à collaborer ; et
- une deuxième face d'appui radial 13 destinée à être mise en appui contre la deuxième paroi du récipient.

Selon l'invention, il est avantageux qu'une superficie de la première face d'appui radial 12 soit supérieure à une superficie de la deuxième face d'appui radial 13. En particulier, la superficie de la première face d'appui radial 12 est au moins 10 fois supérieure à la deuxième face d'appui radial 13 afin que des forces d'adhérences entre la première face d'appui radial 12 de l'anneau élastique 1 et la première paroi en regard du récipient soient largement supérieures à des forces d'adhérences entre la deuxième face d'appui radial 13 de l'anneau élastique 1 et la deuxième paroi en regard du récipient, lorsque ledit anneau élastique 1 est monté sur ledit récipient.

De manière particulièrement avantageuse dans le contexte de l'invention, l'anneau élastique 1 est déformable pour faciliter son utilisation lors de son assemblage avec le récipient avec lequel il est destiné à collaborer d'une part, et d'autre part pour mieux absorber d'éventuels chocs mécaniques apparaissant à l'usage dudit récipient. Par déformable, on comprend que l'anneau élastique 1 peut être déformé lorsqu'il est soumis à un effort - par exemple au travers d'une dilation, d'une contraction, ou d'une torsion. Par suite, lorsque l'anneau élastique 1 n'est plus soumis à cet effort, il reprend sa conformation d'origine et telle que représentée sur les FIGURES 1 à 5.

Selon un mode préféré de l'invention illustré dans les différents exemples de réalisation, la première face d'appui radial 12 est située radialement à l'intérieur de la surface déformable dentelée 11, et la deuxième face d'appui radial 13 est située radialement à l'extérieur de ladite surface déformable dentelée 11. En d'autres termes, la première face d'appui radial 12 est située radialement à l'intérieur de la deuxième face d'appui radial 13, à proximité de l'axe médian O' relativement à ladite deuxième face d'appui radial 13.

La première face d'appui radial 12 de l'anneau élastique 1 est formée par une surface continue qui s'étend radialement autour de l'axe médian O' selon un contour fermé. Dans les différents exemples de réalisation illustrés sur les FIGURES, la première face d'appui radial 12 prend la forme d'une paroi cylindrique dont une courbe directrice est un cercle de centre l'axe médian O' et s'étendant dans un plan perpendiculaire audit axe médian O'.

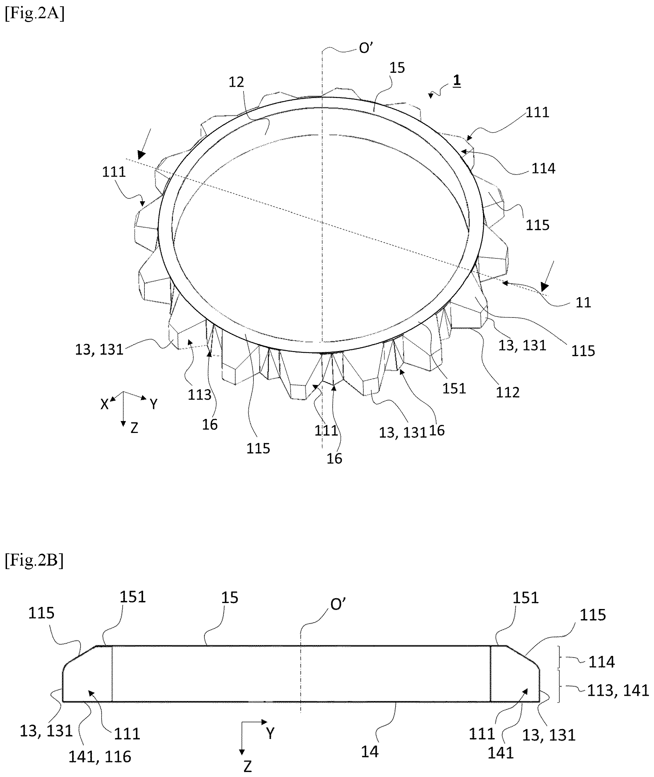

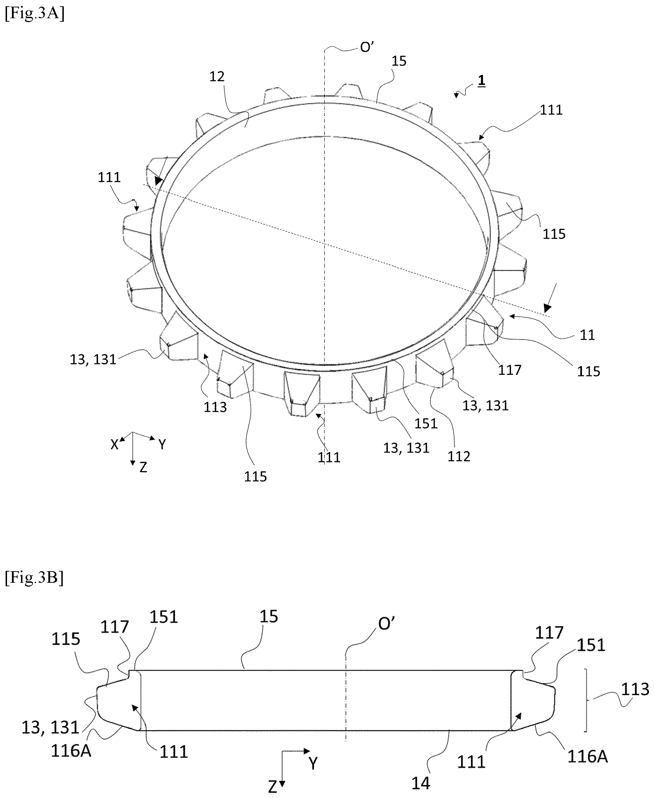

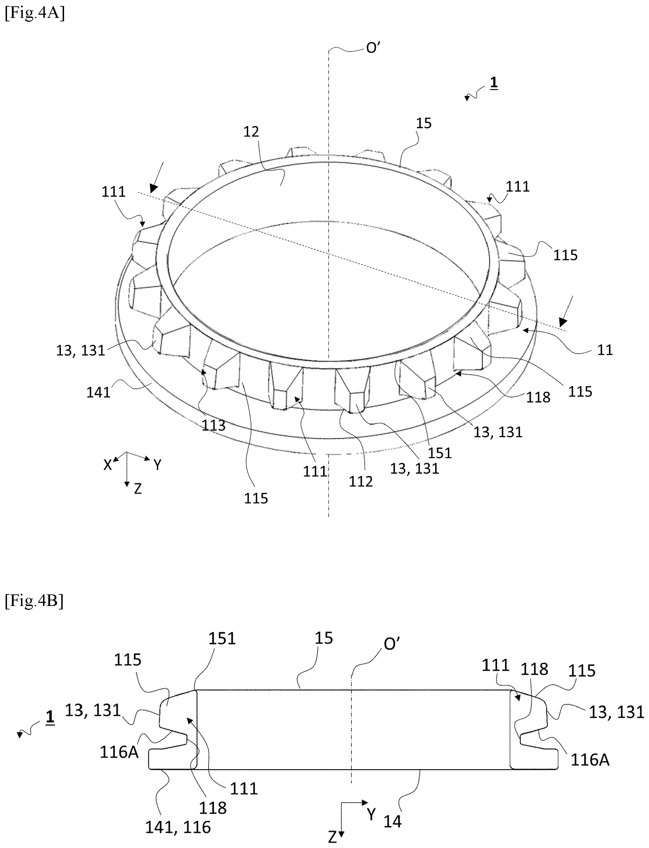

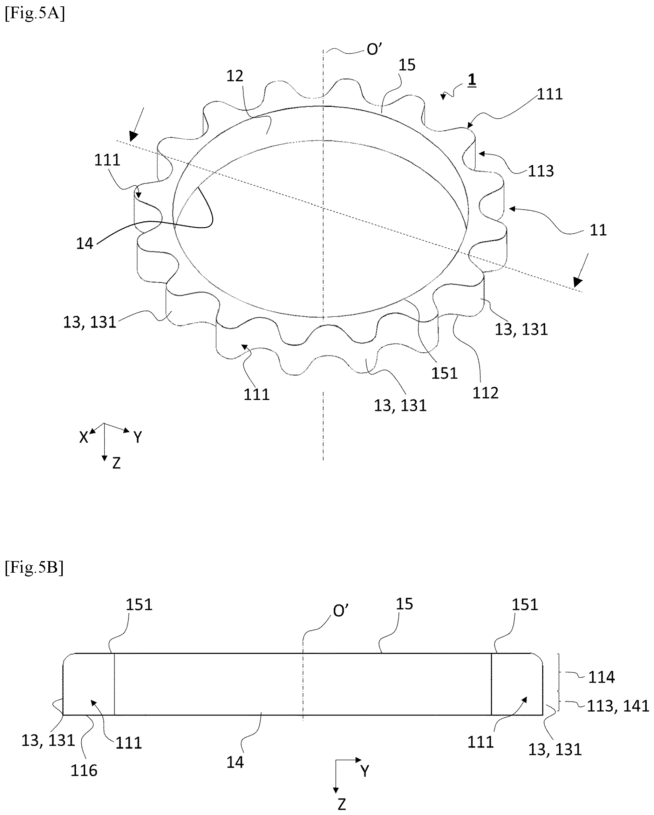

A contrario, la deuxième face d'appui radial 13 de l'anneau élastique 1 est formée par une pluralité de zones d'appui 131 distinctes et distantes angulairement les unes des autres, de sorte que la pluralité des zones d'appui 131 forment collectivement une surface discontinue autour dudit axe médian O'. Dans les différents exemples de réalisation de l'anneau élastique 1, les zones d'appui 131 peuvent prendre des formes différentes :
- dans l'exemple de réalisation illustré sur la FIGURE 1A, chaque zone d'appui 131 a une forme pentagonale ;
- dans les exemples de réalisation illustrés sur les FIGURES 2A et 3A, chaque zone d'appui 131 a une forme carrée ;
- dans l'exemple de réalisation illustré sur la FIGURE 4A, chaque zone d'appui 131 a une forme rectangulaire ;
- dans l'exemple de réalisation illustré sur la FIGURE 5A, chaque zone d'appui 131 a une forme linéaire, du fait de la forme incurvée des dents 111 formant la surface dentelée 11.

D'une manière générale, les zones d'appui 131 ont une forme polygonale. Préférentiellement encore, elles ont toutes les mêmes dimensions, de sorte que la superficie de chaque zone d'appui 131 est égale à la superficie des autres zones d'appui 131.

Comme visible au travers des différents exemples de réalisation, les zones d'appui 131 formant ensemble la deuxième face d'appui radial 13 forment collectivement une surface cylindrique autour de l'axe médian O'. La surface cylindrique ainsi formée est avantageusement coaxiale et concentrique avec la paroi cylindrique formée par la première face d'appui radial 12 de l'anneau élastique 1.

La surface annulaire dentelée 11 de l'anneau élastique 1 est formée par une partie cylindrique 113 et prolongée axialement par une partie tronconique 114 située en-dessous de la partie cylindrique 113. Dans cette configuration, les zones d'appui 131 formant la deuxième face d'appui radial 13 sont situées sur la partie cylindrique 113 de la surface annulaire dentelée 11 de l'anneau élastique 1, au niveau de son extrémité radiale extérieure.

Dans l'exemple de réalisation illustré sur les FIGURES 51 et 5B, la surface annulaire dentelée 11 de l'anneau élastique 1 est uniquement formée par la partie cylindrique 113.

De manière avantageuse, la surface annulaire dentelée 11 est formée par une courbe directrice 112 fermée en périphérie de l'axe médian O'. Cette courbe directrice correspond au contour périphérique extérieur de l'anneau élastique 1. A partir de la courbe directrice 112, l'anneau élastique 1 conforme au premier aspect de l'invention s'étend axialement selon une génératrice qui - d'une manière générale - définit un plan avec l'axe médian O'. En d'autres termes, la génératrice formant la surface annulaire dentelée 112 est soit parallèle à l'axe médian O'- comme dans les différents exemples de réalisation illustrés - soit sécante avec ledit axe médian O'.

Dans les différents modes de réalisation illustrés sur les FIGURES 1 à 5, la surface annulaire dentelée 11 de l'anneau élastique 1 comprend 16 dents 111 qui s'étendent radialement par rapport à l'axe médian O'. Plus particulièrement, chaque dents 111 formant la surface annulaire dentelée 11 s'étend radialement vers l'extérieur par rapport à la première face d'appui radial 12 : chaque dent 111 forme une protrusion qui s'étend radialement vers l'extérieur par rapport à l'axe médian O 'de l'anneau élastique 1 et par rapport à la surface annulaire dentelée 11.

Bien entendu, la forme des dents 111 n'est pas limitative dans le contexte de la présente invention, et les différents exemples de réalisation illustrent plusieurs variantes de réalisation des dents 111 :
- dans le premier exemple de réalisation illustré sur les FIGURES 1A et 1B, l'anneau élastique 1 comprend des dents secondaires 16 intercalées entre les dents 111 - dites principales - dudit anneau élastique 1. Les dents secondaires 16 sont de dimensions radiales inférieures à celles des dents 111 principales, de sorte qu'une extrémité radiale extérieure de chaque dent secondaire 16 est situé radialement à l'intérieur de la zone d'appui 131 des deux dents 111 principales directement adjacentes. Les dents secondaires permettent de renforcer la résistance de l'anneau élastique tout en autorisant sa déformation. Les dents 111 principales ont toutes une même élongation radiale, de sorte que les zones d'appui 131 de toutes les dents 111 principale du premier exemple de réalisation de l'anneau élastique sont toutes situées à une même distance radiale par rapport à l'axe médian O'. En outre, dans un plan perpendiculaire à l'axe médian O', les dents 111 principales ont une forme générale triangulaire et tronquées au niveau de leur terminaison radiale, comme évoqué précédemment. Axialement, une face supérieure 116 des dents 111 principales est plane et perpendiculaire à l'axe médian O' ; et les dents 111 principales comprennent une face biseautée 115 au niveau de leur partie axialement inférieure. Plus particulièrement, dans le premier exemple de réalisation illustré sur les FIGURES 1A et 1B, les faces biseautées 115 des dents 111 principales sont toutes différentes deux à deux ;
- dans le deuxième exemple de réalisation illustré sur les FIGURES 2A et 2B, l'anneau élastique 1 comprend des dents secondaires 16 intercalées entre les dents 111 - dites principales - dudit anneau élastique 1. Les dents secondaires 16 sont de dimensions radiales inférieures à celles des dents 111 principales, de sorte qu'une extrémité radiale extérieure de chaque dent secondaire 16 est situé radialement à l'intérieur de la zone d'appui 131 des deux dents 111 principales directement adjacentes. Les dents secondaires permettent de renforcer la résistance de l'anneau élastique tout en autorisant sa déformation. Dans le deuxième exemple de réalisation illustré sur les FIGURES 2A et 2B, les dents 111 principales ont toutes une même élongation radiale, de sorte que les zones d'appui 131 de toutes les dents 111 principale de l'anneau élastique 2 sont toutes situées à une même distance radiale par rapport à l'axe médian O'. En outre, dans un plan perpendiculaire à l'axe médian O', les dents 111 principales ont une forme générale triangulaire et tronquées au niveau de leur terminaison radiale, comme évoqué précédemment. Axialement, une face supérieure 116 des dents 111 principales est plane et perpendiculaire à l'axe médian O' ; et les dents 111 principales comprennent une face biseautée 115 au niveau de leur partie axialement inférieure. Plus particulièrement, dans le deuxième exemple de réalisation illustré sur les FIGURES 2A et 2B, les faces biseautées 115 des dents 111 principales sont toutes identiques, de sorte qu'elles forment ensemble une unique surface conique par rapport à l'axe médian O' ;
- dans le troisième exemple de réalisation illustré sur les FIGURES 3A et 3B, dans un plan perpendiculaire à l'axe médian O', les dents 111 de l'anneau élastique 1 ont une forme générale triangulaire et tronquées au niveau de leur terminaison radiale, comme évoqué précédemment. Les dents 111 comprennent une face biseautée 115 au niveau de leur partie axialement inférieure et une face supérieure inclinée 116A analogue au niveau de leur partie axialement supérieure. Plus particulièrement, dans le troisième exemple de réalisation illustré sur les FIGURES 3A et 3B, les faces biseautées 115 d'une part, et les faces supérieures inclinées 116A d'autre part sont toutes identiques, de sorte que les faces biseautées 115 forment ensemble une unique surface conique par rapport à l'axe médian O' d'une part ; et les faces supérieures inclinées forment ensemble une unique surface conique par rapport à l'axe médian O' d'autre part. En outre, les dents 111 de l'anneau élastique 1 sont axialement décalée en direction d'une face supérieure d'appui axial 14, de sorte qu'il existe un trottoir circulaire 117 à l'aplomb des faces biseautées 115 de chacune des dents 111 ;
- dans le quatrième exemple de réalisation illustré sur les FIGURES 4A et 4B, dans un plan perpendiculaire à l'axe médian O', les dents 111 de l'anneau élastique 1 ont une forme générale triangulaire et tronquées au niveau de leur terminaison radiale, comme évoqué précédemment. Les dents 111 comprennent une face biseautée 115 au niveau de leur partie axialement inférieure et une face supérieure inclinée 116A analogue au niveau de leur partie axialement supérieure. Plus particulièrement, dans le quatrième exemple de réalisation illustré sur les FIGURES 4A et 4B, les faces biseautées 115 d'une part, et les faces supérieures inclinées 116A d'autre part sont toutes identiques, de sorte que les faces biseautées 115 forment ensemble une unique première surface conique par rapport à l'axe médian O' d'une part; et les faces supérieures inclinées forment ensemble une unique deuxième surface conique par rapport à l'axe médian O' d'autre part. En outre, les dents 111 de l'anneau élastique 1 sont axialement décalée en direction d'une face supérieure d'appui axial 14, de sorte qu'il existe une gorge annulaire 118 formée entre la face supérieure inclinée 116A et une couronne cylindrique 141 qui s'étend radialement à l'extérieur des zones d'appui 131 situées aux extrémités radiales des dents 111 de la surface annulaire dentelée 11 ;
- dans le cinquième exemple de réalisation illustré sur les FIGURES 5A et 5B, dans un plan perpendiculaire à l'axe médian O', les dents 111 de l'anneau élastique 1 ont une forme générale arrondies. Plus particulièrement, les dents 111 sont formées par une surface sinusoïdale qui s'enroule autour de l'axe médian O'. Axialement, les dents 111 s'étendent entre une face inférieure d'appui axial 15 et une face supérieure d'appui axial 14 de l'anneau élastique 1.

Comme évoqué précédemment, l'anneau élastique 1 conforme au premier aspect de l'invention est délimité axialement par deux surfaces planes, parallèles entre elles et perpendiculaires à l'axe médian O' :' : une face supérieure d'appui axial 14 située au niveau d'une extrémité axiale supérieure de l'anneau élastique 1, et une face inférieure d'appui axial 15 située au niveau d'une extrémité axiale inférieure, relativement à l'axe médian O'. Dans le contexte de la présente invention, les dimensions des faces supérieure et inférieure d'appui axial 14, 15 peuvent varier en fonction des effets recherchés et des formes du récipient avec lequel l'anneau élastique 1 est destiné à collaborer :
- dans le premier exemple de réalisation illustré sur les FIGURES 1A et 1B, la face inférieure d'appui axial 15 présente une superficie et des dimensions radiales inférieures à celles de la face supérieure d'appui axial 14 : la face supérieure d'appui axial 14 prend la forme d'une couronne cylindrique 141 radialement plus large, et la face inférieure d'appui axial 15 prend la forme d'une ligne circulaire 151 ;
- dans les deuxièmes, troisièmes et cinquièmes exemples de réalisation illustrés respectivement sur les FIGURES 2, 3 et 5, la face inférieure d'appui axial 15 de l'anneau élastique 1 présente une superficie et des dimensions radiales identiques à celles de la face supérieure d'appui axial 14 ;
- dans le quatrième exemple de réalisation illustré sur les FIGURES 4A et 4B, la face inférieure d'appui axial 15 présente une superficie et des dimensions radiales inférieures à celles de la face supérieure d'appui axial 14 : la face supérieure d'appui axial 14 prend la forme d'une couronne cylindrique 141 qui s'étend radialement au-delà des dents 111 de la surface annulaire dentelée 11, et une épaisseur radiale de la face inférieure d'appui axial 15 est largement inférieure à une dimension radiale de la couronne cylindrique 141.

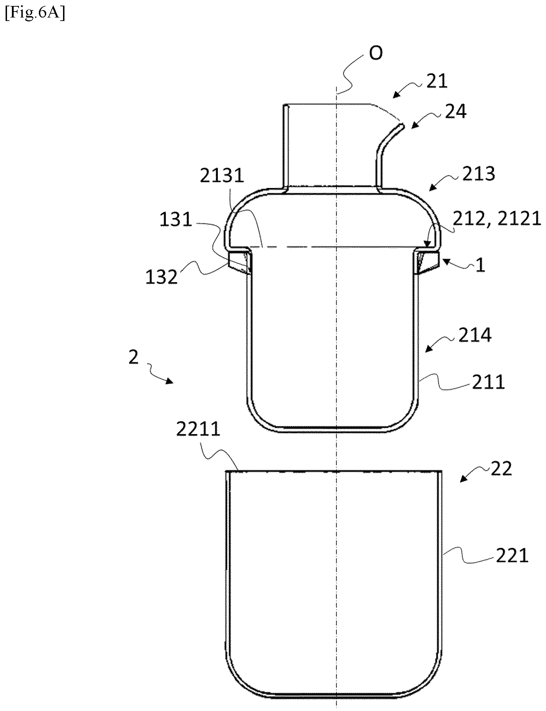

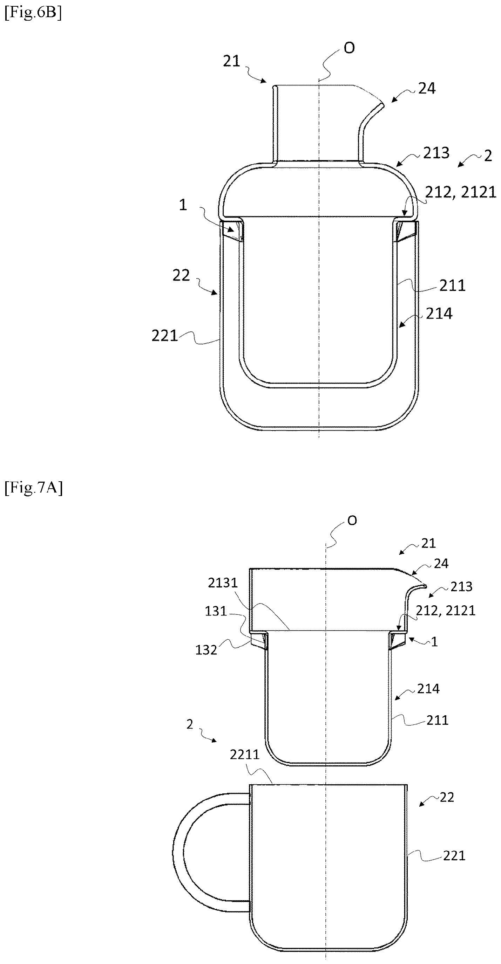

En référence aux FIGURES 6A à 8A et 6B à 8B, un récipient à double parois 2 conforme au deuxième aspect de l'invention est décrit au travers plusieurs exemples de réalisation. D'une manière générale, un tel récipient à double parois 2 a une conformation générale cylindrique suivant l'axe central O : il s'étend radialement dans un plan perpendiculaire à l'axe central O et selon un contour fermé pouvant prendre une pluralité de formes, notamment circulaire, elliptique ou polygonale.

D'une manière générale, le récipient 2 à double parois comprend (i) un élément amovible 21 intérieur logé dans un réceptacle extérieur 22, et un anneau élastique 1 interposé entre une paroi 211 de l'élément amovible 21 intérieur et une paroi 221 du réceptacle extérieur 22 du récipient à double parois 2, de sorte que la paroi 211 de l'élément amovible 21 intérieur du récipient à double parois 2 est en appui contre une première face d'appui radial 131 de l'anneau élastique 1, et la paroi 221 du réceptacle extérieur 22 dudit récipient à double parois 2 est en appui contre une deuxième face d'appui radial 132 dudit anneau élastique 1.

Dans les exemples de réalisation illustrés sur les FIGURES 6 à 8 l'élément amovible 21 intérieur, le réceptacle extérieure 22 et l'anneau élastique 1 sont tous disposés de manière coaxiale les uns par rapport aux autres et relativement à l'axe central O. Ainsi, l'élément amovible 21 intérieur du récipient à double parois 2 est en appui radial contre la première face d'appui radial 131 de l'anneau élastique 113, et le réceptacle extérieur 22 dudit récipient à double parois 2 est en appui radial contre la deuxième face d'appui radial 132 dudit anneau élastique 1.

Le réceptacle extérieur 22 prend la forme d'un récipient concave dont une géométrie prise dans un plan transversal perpendiculaire à l'axe central O peut être quelconque dans le contexte de l'invention. D'une manière générale, le réceptacle extérieur est configuré pour permettre de contenir un liquide, et il présente donc préférentiellement à cet effet une géométrie concave dans un plan comprenant l'axe central O.

Radialement, une dimension du réceptacle extérieur 22 est supérieure à une dimension radiale d'une partie inférieure 214 de l'élément amovible 21 intérieur, afin de permettre une insertion sans frottements de l'élément amovible 21 intérieur dans ledit réceptacle extérieur 22 du récipient à double parois 2.

En outre, l'élément amovible comprend une partie supérieure 213 située axialement au-dessus de la partie inférieure 214, une dimension radiale de la partie supérieure 213 - prise au moins au niveau d'une extrémité inférieure 2131 de ladite partie supérieure 213 - étant supérieure à une dimension radiale de la partie inférieure 214.

De manière avantageuse, la partie inférieure 214 de l'élément amovible 21 a une forme concave afin de lui permettre de contenir par exemple un liquide, comme visible sur les différents exemples de réalisation illustrés sur les FIGURES 6 à 8. La partie supérieure 213 de l'élément amovible 21 peut prendre des formes diverses, en fonction des effets recherchés :
- dans l'exemple illustré sur les FIGURES 6A et 6B, la partie supérieure 213 de l'élément amovible 21 prend la forme d'une bouteille comprenant un bec verseur 24 situé au niveau de l'axe central O du récipient à double parois 2 ;
- dans l'exemple illustré sur les FIGURES 2A et 2B, la partie supérieure 213 de l'élément amovible 21 prend la forme d'une carafe comprenant un bec verseur 24 situé en périphérie du récipient à double parois, à une distance radiale non nulle de l'axe central O.

Contrairement à ceux déjà connus auparavant, le récipient à double parois 2 conforme au premier aspect de l'invention est ainsi formé par un assemblage de plusieurs éléments distincts les uns des autres : au moins un élément amovible 21 intérieur logé dans le réceptacle extérieur 22 et maintenu en position par l'intermédiaire de l'anneau élastique 1. Ainsi, chaque élément amovible 21 intérieur peut être monté ou démonté facilement du réceptacle extérieur 22. Cette proposition astucieuse permet de réaliser un assemblage modulaire du récipient à double parois, illustré dans les différents exemples de réalisation visibles sur les FIGURES 6 à 8, et de réduire ainsi les coûts de fabrication par une production en plus grande série.

Dans les différents exemples de réalisation visibles sur les FIGURES 6 à 8, l'anneau élastique lest monté par emmanchement sur l'élément amovible 21 intérieur du récipient à double parois 2. De par une conception spécifique, l'anneau élastique lest solidaire de l'élément amovible 21 intérieur, ledit élément amovible 21 intérieur et ledit anneau élastique 1 formant ensemble un module pouvant être imbriqué dans un autre module et/ou dans le réceptacle extérieur 22 du récipient à double parois 2.

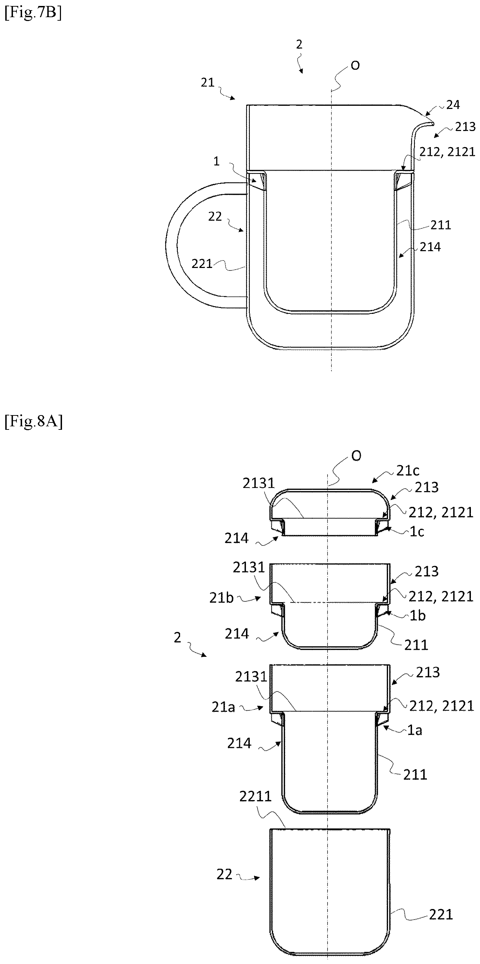

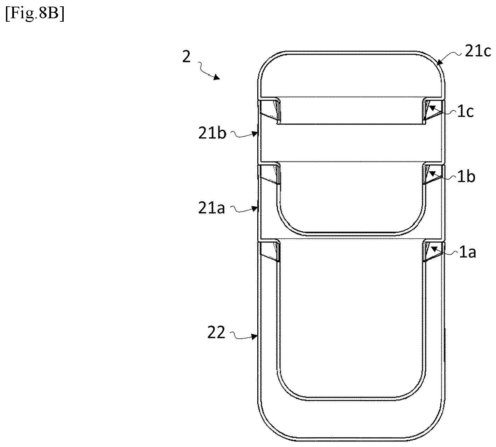

Cette configuration modulaire sera spécifiquement décrite plus en détail en référence aux FIGURES 8A et 8B.

Dans les différents modes de réalisation illustrés sur les FIGURES 6 à 8, l'élément amovible 21 comprend un moyen de blocage axial 212 de l'anneau élastique 1. Le moyen de blocage axial 212 est configuré pour permettre d'arrêter en position axiale l'anneau élastique 1 par rapport à l'élément amovible 21 et relativement à l'axe central O du récipient à double parois 2. Plus particulièrement, dans les exemples de réalisation illustrés sur les FIGURES 6 à 8, le moyen de blocage axial prend la forme d'un épaulement 2121 contre lequel l'anneau élastique lest mis en butée.

Dès lors, lorsque l'élément amovible 21 intérieur du récipient à double parois 2 est inséré dans le réceptacle extérieur 22, l'anneau élastique lest arrêté en translation axiale par l'épaulement 2121 afin de déterminer sa position axiale sur ledit élément amovible 21. A contrario, lorsque l'élément amovible 21 intérieur est retiré du réceptacle extérieur 22 du récipient à double parois 2, alors une géométrie particulière des premières 131 et deuxièmes 132 faces d'appui radial de l'anneau élastique 1 permet audit anneau élastique 1 de glisser plus facilement contre le réceptacle extérieur 22, permettant ainsi l'extraction simultanée de l'élément amovible 21 intérieur et de l'anneau élastique 1, tel un fonctionnement modulaire.
La partie inférieure 214 de chaque élément amovible 21 est ainsi configurée pour être insérée dans l'élément amovible 21 directement adjacent et radialement situé à l'extérieur ou dans le réceptacle extérieur 22 ; et la partie supérieure de chaque élément amovible est configurée pour être mise en appui axial sur une extrémité supérieure 2121 du réceptacle extérieur 22 ou sur une extrémité supérieure 2131 de la partie supérieure 213 de l'élément amovible 21 directement adjacent et situé radialement à l'extérieur.

En référence aux FIGURES 8A et 8B, l'assemblage modulaire va maintenant être plus particulièrement décrit. En effet, chaque paire d'élément amovible 21 et de son anneau élastique 1 emmanché contre le moyen de blocage axial 212 forme un module pouvant être empilé selon un montage gigogne sur un autre élément amovible 21 ou dans le réceptacle extérieur 22 du récipient à double parois 2.

Dans l'exemple illustré sur les FIGURES 8A et 8B, le récipient à double parois 2 comprend ainsi trois modules logés dans le réceptacle extérieur 22.

Chaque élément amovible 21 et son anneau élastique 1 associé, ainsi que le réceptacle extérieure 22 sont tous disposés de manière coaxiale les uns par rapport aux autres et relativement à l'axe central O du récipient à double parois 2. L'élément amovible 21 de chaque module situé à l'intérieur d'un autre module est en appui radial contre la première face d'appui radial 131 de son anneau élastique 1, et la deuxième face d'appui radial 132 dudit anneau élastique 1 est en appui radial contre la paroi 211 de l'élément amovible 21 du module situé directement radialement à l'extérieur, ou du réceptacle extérieur 21 dans le cas du module situé directement à l'intérieur de ce dernier.

Plus particulièrement, le récipient à doubles parois 2 illustré sur les FIGURES 8A et 8B comprend : un réceptacle extérieur 22 contenant un premier élément amovible 21a qui comprend lui-même un deuxième élément amovible 21b qui comprend lui-même un troisième élément amovible 21c, chaque élément amovible 21a-11c étant monté en gigogne dans l'élément amovible 21a-21c directement adjacent et radialement situé à l'extérieur. En outre, chaque élément amovible 21a-21c est associé à un anneau élastique 1a, 1b, 1c qui est emmanché sur chaque élément amovible 21a-21c correspondant de manière coaxiale, chaque couple d'élément amovible 21a-221c associé à son anneau élastique la-lcformant un module monté en gigogne dans le module directement adjacent et radialement situé à l'extérieur. Ainsi :
- le premier élément amovible 21a du récipient à double parois 2 illustré sur les FIGURES 8A et 8B est associé au premier anneau élastique la monté par emmanchement sur ledit premier élément amovible 21a au niveau de son épaulement 2121, le premier élément amovible 21a et le premier anneau élastique la formant ensemble un premier module du récipient à double parois 2. La paroi 211 du premier élément amovible 21a est en appui radial contre une première face d'appui radial 131 du premier anneau élastique la ; et la paroi 221 du réceptacle extérieur 12 est en appui radial contre la deuxième face d'appui radial 132 du premier anneau élastique la ; et
- le deuxième élément amovible 21b du récipient à double parois 2 illustré sur les FIGURES 8A et 8B est associé au deuxième anneau élastique 1b montée par emmanchement sur ledit deuxième élément amovible 21b au niveau de son épaulement 2121, le deuxième élément amovible 21b et le deuxième anneau élastique 1b formant ensemble un deuxième module du récipient à double parois 2. La paroi 211 du deuxième élément amovible 21b est en appui radial contre une première face d'appui radial 131 du deuxième anneau élastique 1b ; et la paroi 211 du premier élément amovible 21a est en appui radial contre la deuxième face d'appui radial 132 du deuxième anneau élastique 1b ; et
- le troisième élément amovible 21c du récipient à double parois 2 illustré sur les FIGURES 8A et 8B est associé au troisième anneau élastique 1c monté par emmanchement sur ledit troisième élément amovible 21c au niveau de son épaulement 2121, le troisième élément amovible 21c et le troisième anneau élastique 1c formant ensemble un troisième module du récipient à double parois 2. La paroi 211 du troisième élément amovible 21c est en appui radial contre une première face d'appui radial 131 du troisième anneau élastique 1c ; et la paroi 211 du deuxième élément amovible 21b est en appui radial contre la deuxième face d'appui radial 132 du troisième anneau élastique 1c. le troisième élément amovible 21c prend ici la forme d'un bouchon fermant le deuxième élément amovible 21b.

En synthèse, l'invention concerne un récipient à double parois 2 comprenant un réceptacle extérieur 22 et au moins un élément amovible 21 logé dans le réceptacle extérieur 22 de manière coaxiale relativement à un axe central O du récipient à double parois 2. Un centrage axial de chaque élément amovible 21 introduit dans le réceptacle extérieur 22 est assuré par un anneau élastique 1 qui est monté par emmanchement et de manière non permanente sur l'élément amovible 21 correspondant. Chaque élément amovible 21 repose axialement sur l'élément amovible 21 directement extérieur ou sur le réceptacle extérieur 22 par l'intermédiaire d'un épaulement 2121 situé au niveau d'une partie supérieure 213 de l'élément amovible et qui repose sur une extrémité axiale supérieure de l'élément amovible 21 directement extérieur ou sur le réceptacle extérieur 22. L'invention permet ainsi de proposer un assemblage modulaire de tels récipients à double parois 2, conduisant à une pluralité de combinaisons possibles obtenues avec des éléments modulaires pouvant être montés en gigogne les uns dans les autres.
Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Anneau élastique (1, 1a, 1b, 1c) destiné à être interposé entre une première paroi d'appui et une deuxième paroi d'appui d'un récipient à double parois (2), l'anneau élastique (1, 1a, 1b, 1c) étant formé par une surface annulaire déformable et dentelée (11) comprenant une pluralité de dents (111) qui s'étendent radialement par rapport à un axe central (O) de l'anneau élastique (1, 1a, 1b, 1c), la surface annulaire déformable et dentelée (11) comportant :
- une première paroi d'appui radial (22) destinée à être mise en appui contre la première paroi d'appui du récipient (2) ; et
- une deuxième paroi d'appui radial (13) destinée à être mise en appui contre la deuxième paroi d'appui du récipient (2) ;
**caractérisé en ce que** une superficie de la première paroi d'appui radial (22) est supérieure à une superficie de la deuxième paroi d'appui radial (13).

2. Anneau élastique (1, 1a, 1b, 1c) selon la revendication précédente, dans lequel la première paroi d'appui radial (22) a une rugosité supérieure à une rugosité de la deuxième paroi d'appui radial (13).

3. Anneau élastique (1, 1a, 1b, 1c) selon l'une quelconque des revendications précédentes, dans lequel la première paroi d'appui radial (22) prend la forme d'une paroi cylindrique qui s'étend axialement selon l'axe central (O) de l'anneau élastique (1, 1a, 1b, 1c) et, selon une direction parallèle à son axe central (O), la surface annulaire et dentelée (11) de l'anneau élastique (1, 1a, 1b, 1c) comprend une partie cylindrique (113) prolongée par une partie tronconique (114).

4. Anneau élastique (1, 1a, 1b, 1c) selon la revendication précédente, dans lequel la pluralité de dents (111) formant la surface annulaire s'étendent en saillie depuis la partie cylindrique (113) et radialement vers l'extérieur par rapport à la première paroi d'appui radial (22).

5. Anneau élastique (1, 1a, 1b, 1c) selon l'une quelconque des revendications précédentes, dans lequel, selon une direction axiale, l'anneau élastique (1, 1a, 1b, 1c) comprend :
- une face supérieure d'appui axial (14) plane formée par une face supérieure de la pluralité des dents (111) de la surface annulaire et dentelée (11) ; et/ou
- une face inférieure d'appui axial (15) plane formée par une face inférieure de la pluralité des dents (111) de la surface annulaire et dentelée (11).

6. Anneau élastique (1, 1a, 1b, 1c) selon la revendication 5, dans lequel la face supérieure d'appui axial (14) prend la forme d'une couronne cylindrique (141) située axialement au-dessus de la pluralité des dents (111) de la surface annulaire et dentelée (11), la couronne cylindrique (141) s'étendant radialement au-delà de la deuxième paroi d'appui radial (13) de l'anneau élastique (1, 1a, 1b, 1c).

7. Anneau élastique (1, 1a, 1b, 1c) selon la revendication 5, dans lequel la face supérieure d'appui axial (14) prend la forme d'une pluralité de casquettes, chaque casquette étant situé au niveau d'une dent (111) correspondante de la surface annulaire et dentelée (11), chaque casquette s'étendant radialement au-delà de la deuxième paroi d'appui radial (13) de l'anneau élastique (1, 1a, 1b, 1c).

8. Récipient à double parois (2) comprenant :
- un élément amovible (21, 21a, 21b, 21c) intérieur logé dans un réceptacle extérieur (22) du récipient à double parois (2) ; et
- un anneau élastique (1, 1a, 1b, 1c) selon l'une quelconque des revendications précédentes, l'anneau élastique (1, 1a, 1b, 1c) étant interposé entre une paroi de l'élément amovible (21, 21a, 21b, 21c) intérieur et une paroi du réceptacle extérieur (22) du récipient à double parois (2), de sorte que la paroi de l'élément amovible (21, 21a, 21b, 21c) intérieur du récipient à double parois (2) est en appui contre la première face d'appui radial (131) de l'anneau élastique (1, 1a, 1b, 1c), et la paroi du réceptacle extérieur (22) dudit récipient à double parois (2) est en appui contre la deuxième face d'appui radial (132) dudit anneau élastique (1, 1a, 1b, 1c).

9. Récipient à double parois (2) selon la revendication précédente, dans lequel l'élément amovible (21, 21a, 21b, 21c) intérieur, le réceptacle extérieur (22) et l'anneau élastique (1, 1a, 1b, 1c) sont tous disposés de manière coaxiale les uns par rapport aux autres, l'élément amovible (21, 21a, 21b, 21c) intérieur du récipient à double parois (2) étant en appui radial contre la première face d'appui (131) de l'anneau élastique (1, 1a, 1b, 1c), et le réceptacle extérieur (22) dudit récipient à double parois (2) étant en appui radial contre la deuxième face d'appui (132) de ladite anneau élastique (1, 1a, 1b, 1c).

10. Récipient à double parois (2) selon la revendication précédente, dans lequel l'élément amovible (21, 21a, 21b, 21c) intérieur du récipient à double parois (2) est un premier élément amovible (11a) et l'anneau élastique (1, 1a, 1b, 1c) interposée entre le premier élément amovible (21a) et le réceptacle extérieur (22) du récipient à double parois (2) est un premier anneau élastique (1a), le récipient à double parois (2) comprenant en outre au moins un deuxième élément amovible (21b) logé de manière coaxiale dans le premier élément amovible (21a) par l'intermédiaire d'un deuxième anneau élastique (1b) entre chaque élément amovible (21, 21a, 21b, 21c) directement adjacent.

11. Récipient à double parois (2) selon l'une quelconque des revendications 9 ou 10, dans lequel la paroi d'au moins un élément amovible (21, 21a, 21b, 21c) comprend un moyen de blocage axial (212) de l'anneau élastique (1, 1a, 1b, 1c) associée, le moyen de blocage axial (212) étant configuré pour bloquer l'anneau élastique (1, 1a, 1b, 1c) selon une direction axiale par rapport audit au moins élément amovible (21, 21a, 21b, 21c) correspondant.

12. Récipient à double parois (2) selon la revendication précédente, dans lequel le moyen de blocage axial (212) est du type d'un épaulement (2121) formé sur la paroi de l'au moins un élément amovible (21, 21a, 21b, 21c) correspondant, l'épaulement (2121) s'étendant radialement vers l'extérieur par rapport à ladite paroi.

13. Récipient à double parois (2) selon l'une quelconque des revendications 10 à 12, dans lequel le deuxième élément amovible (21b) comprend (i) une partie inférieure (214) située radialement et axialement à l'intérieur du premier élément amovible (21a), et (ii) une partie supérieure (213) dont des dimensions radiales sont supérieures à des dimensions radiales de la partie inférieure (214), le deuxième anneau élastique (1b) du récipient à double parois (2) étant monté par emmanchement sur la partie inférieure (214) du deuxième élément amovible (21b) et contre une extrémité inférieure (2131) de la partie supérieure (213) dudit deuxième élément amovible (21b).

14. Récipient à double parois (2) selon la revendication précédente, dans lequel le récipient à double parois (2) comprend un joint plat monté par emmanchement sur la partie inférieure (214) du premier élément amovible (21a) et contre une extrémité inférieure (2131) de la partie supérieure (213) dudit premier élément amovible (11a), le premier anneau élastique (1a) étant monté axialement contre le joint plat.
